# EUROPEAN PATENT APPLICATION

(11) **EP 1 719 927 A1**
(43) Date of publication of application: **08.11.2006**
(21) Application number: 05710204.8
(22) Date of filing: 15.02.2005
(51) Int. Cl.: F16C 33/80, F02B 33/40

(54) **ROLLING BEARING FOR SUPERCHARGER**

(30) Priority: 18.02.2004 JP 2004040839; 18.02.2004 JP 2004040841
(71) Applicant: JTEKT CORPORATION, Chuo-ku Osaka-shi Osaka 542-8502 (JP)
(72) Inventor: INOUE, Hiromi, Nara-shi, Nara 6310006 (JP); SUMIHARA, Hidetoshi, Hirakata-shi, Osaka5731121 (JP); MURAO, Satoru, Sakai-shi, Osaka 5998123 (JP)
(74) Representative: Pohlmann, Eckart
(86) International application number: PCT/JP2005/002253
(87) International publication number: WO 2005/078298

(57) **Abstract**

In a rolling bearing for a supercharger in which grease is enclosed in an annular space, and a non-contact sealing member for forming a gap with an inner ring is disposed in a locking groove disposed in an axial end portion of an outer ring, a locking portion of the sealing member on the side of the outer ring is covered with rubber, and the length of an opposed face of an inner-ring side end portion which is opposed to the inner ring across the gap is 0.8 mm or more in a section view which is in parallel to the axis. Alternatively, an area of the inner ring on an outer circumferential face which is opposed to an inner-ring side end face of the sealing member is formed to have a tapered shape in which the diameter is more increased as advancing from an axial end portion side to a middle side. According to these configurations, leakage of grease in the use under high-speed rotation can be prevented from occurring, and the life period of the rolling bearing is improved.

## Description

### Technical Field

The present invention relates to a rolling bearing adaptable for high-speed rotation, and more particularly to a grease-packed rolling bearing which is suitable for supporting a rotation shaft of a supercharger used in an automobile engine, or the like.

### Background Art

As means for supercharging an internal combustion engine (engine) to enhance the output, a supercharger (such as a turbocharger or a supercharger) is used. In a turbocharger, a compressor is driven by a turbine which is driven by an exhaust gas of an engine, and a supercharging operation is performed by using the air compressed by the compressor. It is known that a main shaft of the turbocharger rotates at a high speed. In order to cope with high-speed rotation in a high-temperature environment, a bearing for supporting the rotation of the main shaft includes two floating bushes disposed separately in the axial direction (see Japanese Patent Publication (Kokai) No. HEI5-71537, or "Gasoline Engine of Automotive Engineering Collected Edition supervised by Tsutomu GOMI, Vol. 4, Sankai-do, July 1980, p. 168, and the like).

On the other hand, in the automobile industry, in order to improve the response of an engine and suppress the exhaust gas, a supercharger using an electric motor has been developed. As such a supercharger with an electric motor, an electrically-assisted turbocharger in which the supercharging operation is energized by the driving of the electric motor in accordance with the operating condition of the engine, and an electric supercharger which is not provided with a turbine, and in which a compressor is driven only by an electric motor are known (see Japanese National Patent Publication (Kohyo) No.2001-527613, and Japanese Patent Publication (Kokai) No.2002-339757, Japanese Patent Publication (Kokai) No.2003-322026, and the like).

In such a supercharger with an electric motor, at least one of the bearings for supporting the rotation of the main shaft is not affected by the high temperature of the exhaust gas, and is unnecessary to be cooled. Therefore, it has been studied that a rolling bearing in which grease is enclosed is disposed in this site, instead of a conventional floating bush.

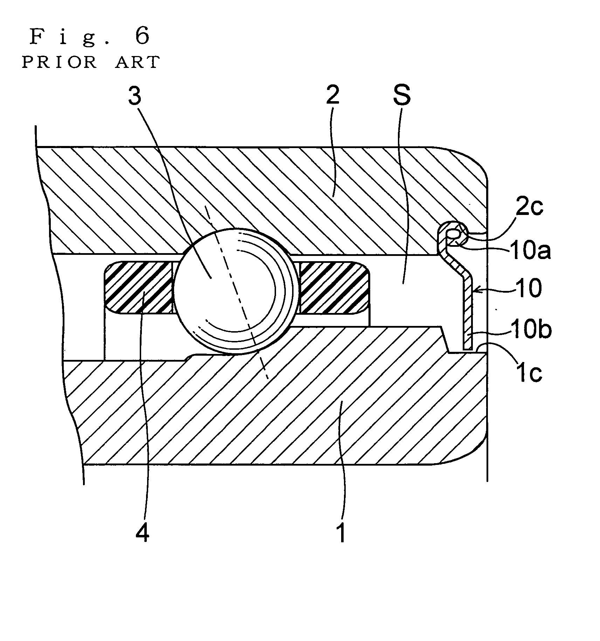

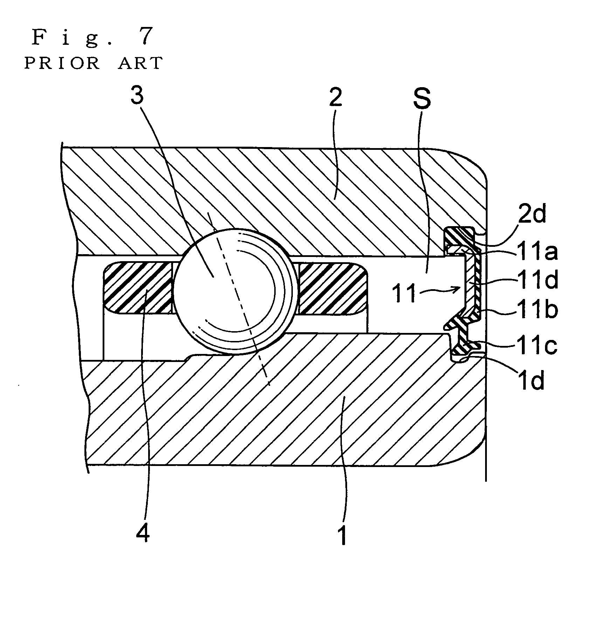

As shown in section views of Figs. 6 and 7, in order to hold the grease (not shown) and prevent external foreign materials from being mixed in, a conventional grease-packed rolling bearing has a structure in which, in the case of rotation of an inner ring 1, a locking portion (10a or 11a) of a sealing member (a shield plate 10 or a seal 11) is fitted in a locking groove 2c or 2d disposed in an end portion of an outer ring 2.

Patent Reference 1: Japanese Patent Publication (Kokai) No. HEI5-71537
Patent Reference 2: Japanese National Patent Publication (Kohyo) No.2001-527613
Patent Reference 3: Japanese Patent Publication (Kokai) No.2002-339757
Patent Reference 4: Japanese Patent Publication (Kokai) No.2003-322026
Non-patent Reference 1: "Gasoline Engine of Automotive Engineering Collected Edition" supervised by Tsutomu GOMI, Vol. 4, Sankai-do, July 1980, p. 168

### Disclosure of the Invention

### Problems to be Solved by the Invention

However, also the above-described supercharger with an electric motor rotates at a high speed (50,000 rpm or higher) in the same manner as a conventional supercharger. Therefore, it is often that the life period of a rolling bearing using general sealing members is significantly shortened.

Specifically, in the seal 11 (contact-type seal), a lip portion 11c thereof is in contact with a sealing groove 1d disposed in an end portion of the inner ring 1, thereby exhibiting a good sealing property. However, heat is generated by the friction with the inner ring 1, so that the configuration cannot be used in a bearing which rotates at a high speed. The shield plate 10 can be used in a high-speed rotation area, because it is not in contact with the inner ring 1. However, there is a disadvantage that the sealing property is poor, and, in the case of continuous operation at a high speed, grease may leak from a gap between the locking groove 2c and the locking portion 10a.

The invention has been conducted in order to solve the above-discussed problems. It is an object of the invention to provide a rolling bearing for a supercharger in which grease will not leak even in the case of continuous operation at a high speed, and which has a long life period.

### Means for Solving the Problems

In order to attain the above-mentioned object, the invention of claim 1 is a rolling bearing for a supercharger in which grease is enclosed in an annular space formed between an inner ring and an outer ring that are coaxially disposed, and a non-contact sealing member for forming a gap with the inner ring is disposed in a locking groove disposed in an end portion in an axial direction of the outer ring, characterized in that at least a locking portion on the side of the outer ring of the sealing member is covered with rubber, and a length of an opposed face of an inner-ring side end portion of the sealing member which is opposed to the inner ring across the gap is 0.8 mm or more in a section view which is in parallel to an axis.

Specifically, by covering the locking portion of the sealing member (in the vicinity of the end portion on the side of the outer ring) with rubber, the rubber is in close contact with the locking groove of the outer ring. Thus, it is possible to prevent grease leakage from the locking groove due to high-speed rotation, from occurring. In addition, by setting the length of the opposed face on the side of the sealing member in the section view which is in parallel to the axis to 0.8 mm or more, a labyrinth which is sufficient for preventing grease from leaking is formed between the inner ring and the sealing member. Accordingly, the rolling bearing for a supercharger of the invention can maintain excellent lubrication over a long time even in the use under high-speed rotation.

In the case where the length of the opposed face on the side of the sealing member in the section view which is in parallel to the axis is set to be less than 0.8 mm, there is a possibility that grease may leak from a gap between the inner-ring side end portion of the sealing member and the inner ring, as a result of high-speed rotation at 50,000 rpm or higher.

In the rolling bearing for a supercharger of the invention, preferably, a radial gap between the inner-ring side end face of the sealing member and the inner ring is 0.1 mm to 0.3 mm (claim 2). In the case where the gap is less than 0.1 mm, or the gap exceeds 0.3 mm, the labyrinth effect may not be attained sufficiently.

In order to attain the same object, the invention of claim 3 is characterized in that, in a rolling bearing for a supercharger having the same configuration as described above, an area of an outer circumferential face of the inner ring which is opposed to an inner-ring side end face of the sealing member is formed to have a tapered shape in which a diameter is more increased as advancing from an axial end portion side to a middle side.

Specifically, when the inner circumferential face of the inner ring opposed to the sealing member is formed to have a tapered shape (conical face) in which the diameter is more increased as advancing toward the middle side in the axial direction, the grease which reaches the gap between the sealing member and the inner ring undergoes a force which is due to the centrifugal force, and which pushes back the grease to the middle side in the axial direction. Accordingly, the rolling bearing for a supercharger of the invention can prevent the grease enclosed in the bearing from leaking to the outside, even in the case of high-speed rotation.

Preferably, the inclination of the tapered inner circumferential face of the inner ring is 5 degrees or more with respect to a rotation axis (claim 4).

When the inclination of the tapered face is less than 5 degrees, the force due to the centrifugal force and of pushing back the grease may be insufficient, and sufficient effects may not be attained. As the inclination angle of the tapered face is larger, the effect of preventing the grease from leaking is further enhanced. However, the maximum value of the inclination angle which is actually settable depends on the strength (thickness) of the inner ring of a portion where the tapered face is formed, the difficulty level of the work, and the like.

Next, the invention of claim 5 is characterized in that the inner-ring side end face of the sealing member which is opposed to the tapered inner circumferential face of the inner ring is in parallel to the tapered inner circumferential face of the inner ring.

Specifically, when the inner-ring side end face of the sealing member is in parallel to the tapered face of the inner ring, a labyrinth for preventing the grease from leaking is formed between them.

Preferably, an axial length of the inner-ring side end face of the sealing member is twice or more as long as a distance between the inner-ring side end face and the tapered inner circumferential face of the inner ring (claim 6).

In the labyrinth formed between the inner-ring side end face of the sealing member and the tapered face of the inner ring, when the axial length of the inner-ring side end face of the sealing member is set to be twice or more as long as the distance (gap) between the faces depending on the gap distance between the faces, a sufficient and necessary effect of preventing the grease from leaking can be expected.

The term "sealing member" in the invention includes both of a seal and a shield plate.

### Brief Description of the Drawings

[Fig. 1] Fig. 1 is a schematic section view showing the structure of a supercharger with an electric motor.
[Fig. 2] (A) is a section view showing a sealing structure of a rolling bearing for a supercharger of a first embodiment of the invention. (B) and (C) show modifications of a sealing member (shield plate 5) used in the rolling bearing for a supercharger of the first embodiment.
[Fig. 3] (A) is a section view showing a sealing structure of a rolling bearing for a supercharger of a second embodiment of the invention. (B) and (C) show modifications of a sealing member (seal 6) used in the rolling bearing for a supercharger of the second embodiment.
[Fig. 4] (A) is a section view showing a sealing structure of a rolling bearing for a supercharger of a third embodiment of the invention. (B) is an enlarged view of a portion P in (A).
[Fig. 5] Fig. 5 is a section view showing a sealing structure of a rolling bearing for a supercharger of a fourth embodiment of the invention.
[Fig. 6] Fig. 6 is a section view showing a sealing structure in a conventional rolling bearing.
[Fig. 7] Fig. 7 is a section view showing another sealing structure in the conventional rolling bearing.

### Description of Reference Numerals

- 1: inner ring
- 1a, 1b, 1c, 1d: sealing groove
- 2: outer ring
- 2a, 2b, 2c, 2d: locking groove
- 3: ball
- 4: cage
- 5: shield plate (sealing member)
- 5a: locking portion
- 5b: rubber
- 5c: end portion
- 6: seal (sealing member)
- 6a: locking portion
- 6b: rubber
- 6c: end portion
- 6d: core metal
- 7: seal (sealing member)
- 7a: locking portion
- 7b: rubber
- 7c: end portion
- 8: shield plate (sealing member)
- 8a: locking portion
- 8b: end portion
- 10: shield plate (sealing member)
- 10a: locking portion
- 10b: end portion
- 11: seal (sealing member)
- 11a: locking portion
- 11b: rubber
- 11c: lip portion
- 11d: core metal
- 21: motor housing
- 22: compressor housing
- 23: shaft
- 24: stator
- 25: rotor
- 26: compressor impeller
- B: rolling bearing
- S: bearing annular space

### Best Mode for Carrying Out the Invention

Hereinafter, modes which execute the invention will be described with reference to the drawings.

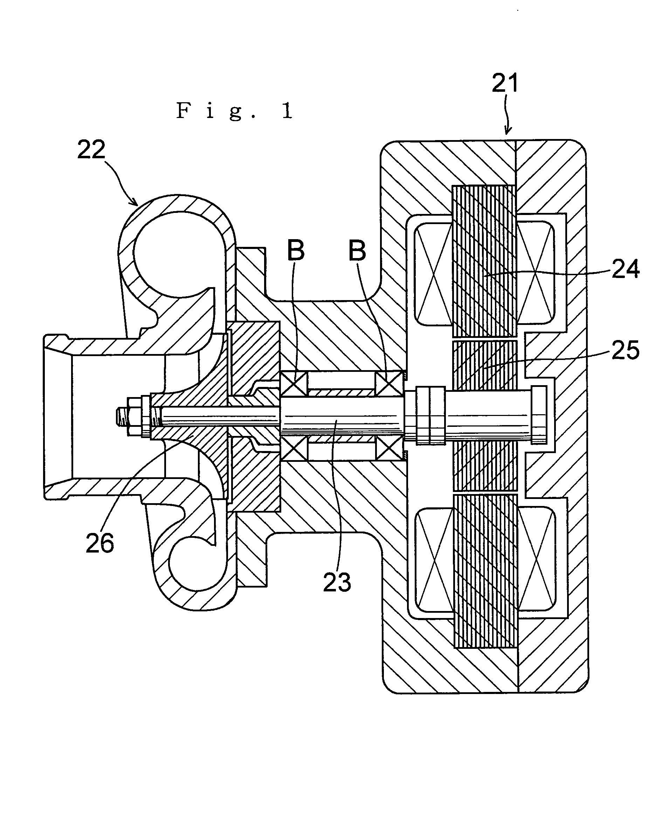

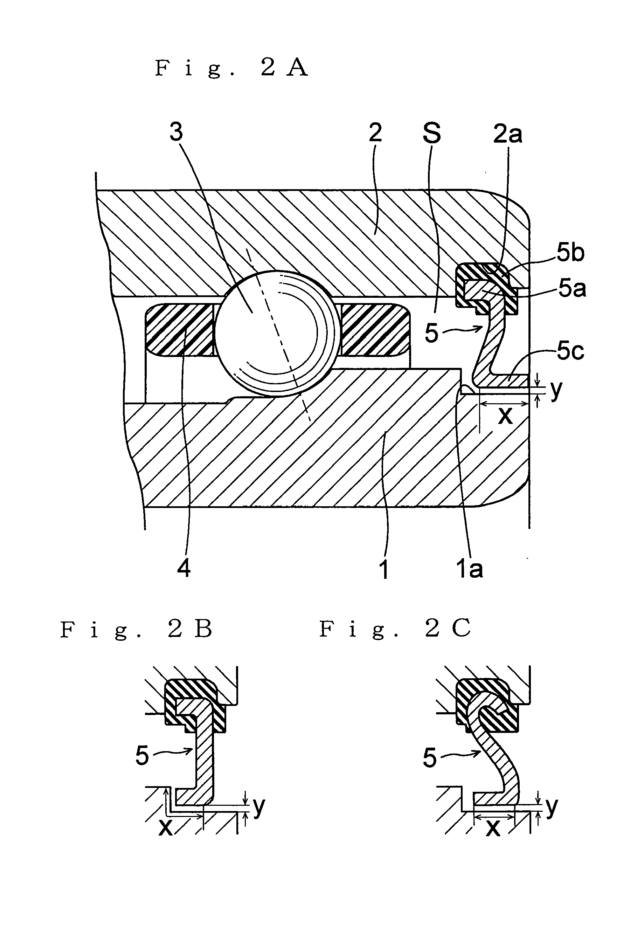

Fig. 1 is a schematic section view showing the structure of a supercharger with an electric motor. Fig. 2 is an axial section view showing the structure of a rolling bearing for a supercharger of a first embodiment of the invention.

The supercharger with an electric motor in which rolling bearings B, B for a supercharger of the invention are used is an electric supercharger which is not provided with a turbine, and in which a compressor is driven only by an electric motor. A compressor portion provided with a compressor impeller 26 and an electric motor portion are formed on both end sides of a shaft 23 of the electric supercharger. Compressed air is supplied to an engine by rotation of the compressor impeller 26. The shaft 23 is rotatably supported by the two rolling bearings B, B. The reference numeral 21 in the figure denotes a motor housing, 22 denotes a compressor housing, 24 denotes a stator of the motor, and 25 denotes a rotor of the motor.

As shown in Fig. 2(A), the fundamental configuration of the rolling bearings B, B for a supercharger in the embodiment is similar to that of a conventional angular contact ball bearing, and is formed by: an inner ring 1 having a raceway groove on an outer circumferential face; an outer ring 2 having a raceway groove on an inner circumferential face; a plurality of balls 3 which are disposed in an annular space S formed between the inner ring 1 and the outer ring 2; and a cage 4 for holding the balls 3 at predetermined intervals in a circumferential direction. In the annular space S, grease (not shown) is enclosed together with the balls 3 and the cage 4. As a material of the balls 3, ceramics is preferably used.

The rolling bearing for a supercharger of the embodiment is characterized in that a locking portion 5a of a sealing member (shield plate 5) for sealing the annular space S is covered with rubber 5b. The shield plate 5 is fixed in such a manner that the locking portion 5a is fitted in a locking groove 2a formed in an end portion of the outer ring 2.

A gap (the distance: y = about 0.2 mm) is formed between an inner-ring side end portion 5c of the shield plate 5 and a sealing groove 1a of the inner ring 1. The end portion 5c of the shield plate 5 is bent so as to be in parallel to the sealing groove 1a. The axial length x of an opposed face of the shield plate 5 which is opposed to the sealing groove 1a is 0.8 mm or more, when viewed in the axially parallel direction as shown in Fig. 2(A).

According to the above-described configuration, in the rolling bearing for a supercharger of the embodiment, the rubber 5b is in close contact with the locking groove 2a, so that leakage of grease from the locking groove 2a caused by high-speed rotation of the supercharger can be prevented from occurring. In addition, since the length x of the opposed face of the shield plate 5 is set to be 0.8 mm or more, a labyrinth which is sufficient for preventing the leakage of grease is formed between the inner ring 1 and the shield plate 5. Accordingly, the rolling bearing for a supercharger of the embodiment can maintain good lubrication over a long period of time even in the use under high-speed rotation.

The shape of the shield plate 5 is not restricted to the above-described embodiment. For example, as shown in Figs. 2(B) and 2(C), even when the locking portion and the end portion on the inner-ring side are changed, shapes which attain the same effects can be designed.

Next, a second embodiment of the invention will be described.

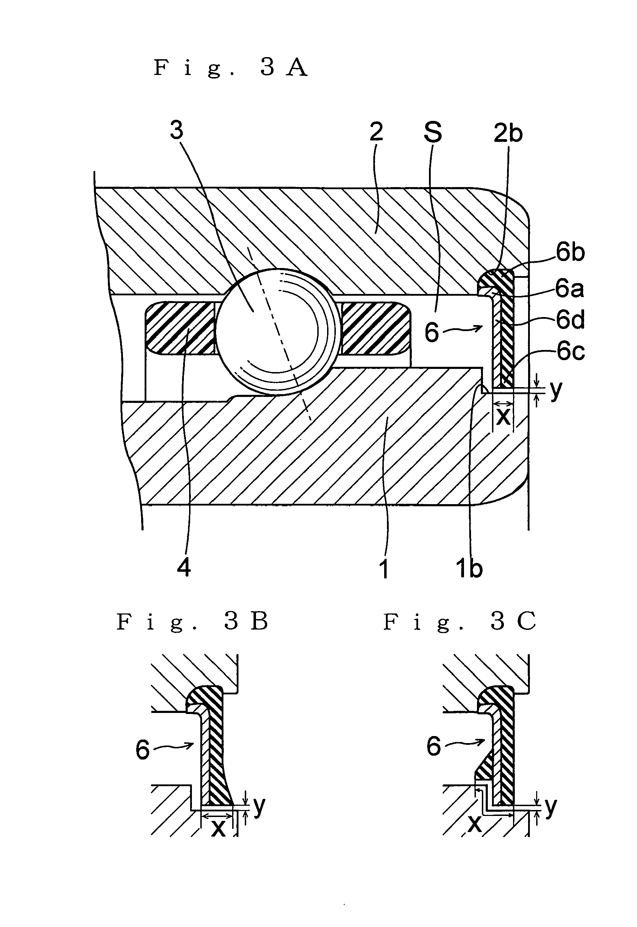

Fig. 3 is an axial section view showing the structure of a rolling bearing for a supercharger of a second embodiment of the invention. The configuration of a supercharger with an electric motor (Fig. 1) in which the rolling bearing for a supercharger is used is the same as that of the first embodiment, and hence the detailed description is omitted.

The rolling bearing for a supercharger of the embodiment is different from the first embodiment in that the sealing member is formed as a seal 6 configured by a core metal 6a and rubber 6b.

The seal 6 is fixed by fitting a locking portion 6a covered with the rubber 6b into the locking groove 2b of an end portion of the outer ring 2, similarly to the shield plate 5. A gap (the distance: y = about 0.2 mm) is formed between an inner-ring side end portion 6c of the seal and a sealing groove 1b of the inner ring 1. As shown in Fig. 3(A), the axial length x of an opposed face of the seal 6 opposed to the sealing groove 1b is 0.8 mm or more, when viewed in the axially parallel direction.

According to the above-described configuration, in the rolling bearing for a supercharger of the embodiment, leakage of grease from the locking groove 2a caused by high-speed rotation of the supercharger can be prevented from occurring, and a labyrinth for preventing the leakage of grease from occurring is formed between the inner ring 1 and the seal 6. Accordingly, also the rolling bearing for a supercharger of the embodiment can maintain good lubrication over a long period of time.

Also the shape of the seal 6 is not restricted to the above-described embodiment. For example, even when the thickness of the rubber portion is changed as shown in Fig. 3 (B) , or when a lip for extending the labyrinth is formed as shown in Fig. 3(C), shapes which attain the same effects can be designed.

The kinds of the rubber (5a, 5b) used in the rolling bearing for a supercharger of the invention are not particularly restricted, but acrylic rubber having a wider applicable temperature range, fluorine rubber, or the like is preferably used. Alternatively, nitrile rubber, silicon rubber, or the like may be used.

Next, a third embodiment of the invention will be described.

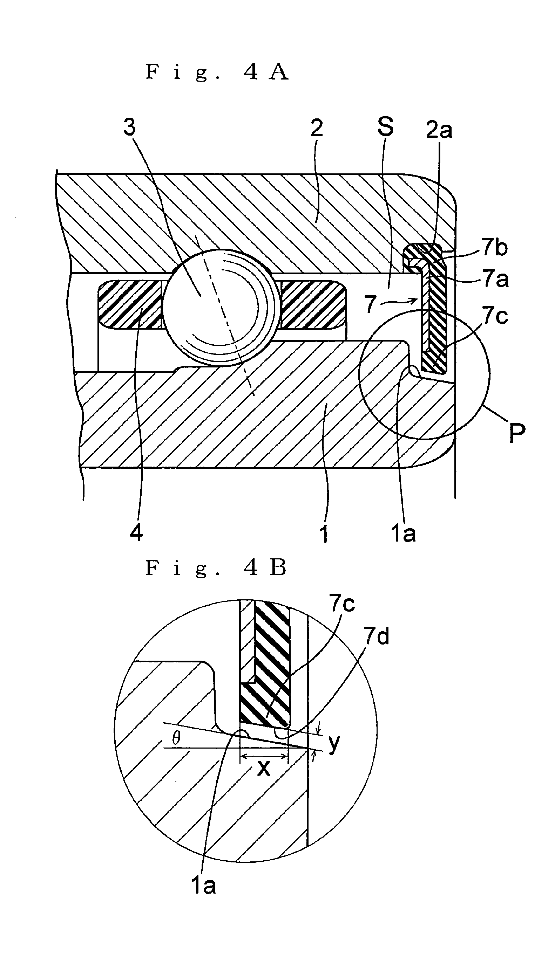

Fig. 4 is an axial section view showing the structure of a rolling bearing for a supercharger of a third embodiment of the invention. Also the configuration of a supercharger with an electric motor (Fig. 1) in which the rolling bearing for a supercharger is used is the same as that of the first embodiment.

The rolling bearing for a supercharger of the embodiment is characterized in that the sealing groove 1a of the inner ring 1 opposed to an end face 7c of a seal 7 is formed so as to have a tapered shape (conical shape) in which the diameter is increased as advancing from an axial end portion side toward a middle side. The inclination of the tapered sealing groove 1a is formed so that an angle θ with respect to the rotation axis of the inner ring 1 is 5 degrees or more, as shown in Fig. 4(B).

A gap (the distance y) is formed between the inner-ring side end portion 7c of the seal 7 and the sealing groove 1a of the inner ring 1. The end portion 7c is formed so as to be in parallel to the sealing groove 1a. As shown in Fig. 4(B), the axial length x of an opposed face of the seal 7 opposed to the sealing groove 1a is twice or more as long as the distance y of the gap (x ≥ 2y), when it is viewed in the axially parallel direction.

According to the above-described configuration, in the rolling bearing for a supercharger of the embodiment, a labyrinth which is sufficient for preventing the leakage of grease from occurring is formed between the inner ring 1 and the seal 7. Since the surface of the sealing groove 1a is formed as an inclined face with an angle θ = 5 degrees or more, the grease which reaches the gap between the seal 7 and the inner ring 1 is pushed back to the middle side in the axial direction (to the inside of the bearing) by the centrifugal force of the rotation. Accordingly, the rolling bearing for a supercharger of the embodiment can maintain good lubrication for a long period of time also in the use under high-speed rotation.

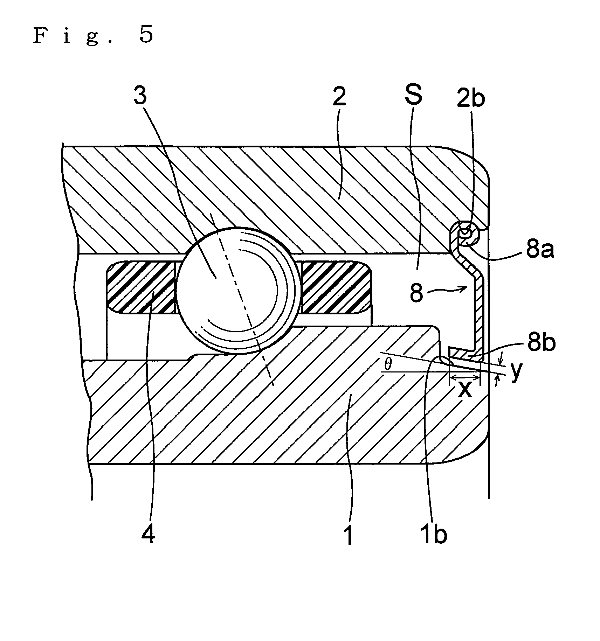

Also the shape of the seal 7 used in the invention is not restricted to the above-described embodiments, but various modifications can be formed. Alternatively, the sealing member may be a shield plate 8 as in a fourth embodiment (Fig. 5). The same effects as those in the above-described embodiments can be attained by the shield plate 8.

### Industrial Applicability

As described above, according to the invention of claim 1, the rubber which covers the locking portion of the sealing member is in close contact with the locking groove of the outer ring, and the labyrinth which is sufficient for preventing the leakage of grease from occurring is formed. Therefore, the leakage of grease in the use under high-speed rotation can be prevented from occurring.

According to the invention of claim 3, the force of pushing back the grease which reaches the gap between the sealing member and the inner ring toward the middle in the axial direction due to the centrifugal force is applied to the grease. Even in the case of high-speed rotation, therefore, the leakage of grease enclosed in the bearing to the outside can be suppressed.

Accordingly, the rolling bearing for a supercharger of the invention can be configured as a rolling bearing in which grease does not leak even in continuous operation under high-speed rotation, and which has a long life period.

## Claims

1. A rolling bearing for a supercharger in which grease is enclosed in an annular space formed between an inner ring and an outer ring that are coaxially disposed, and a non-contact sealing member for forming a gap with said inner ring is disposed in a locking groove disposed in an end portion in an axial direction of said outer ring, wherein
at least a locking portion on a side of the outer ring of said sealing member is covered with rubber, and a length of an opposed face of an inner-ring side end portion of said sealing member which is opposed to said inner ring across said gap is 0.8 mm or more in a section view which is in parallel to an axis.

2. A rolling bearing for a supercharger according to claim 1, wherein a radial gap between said inner-ring side end face of said sealing member and said inner ring is 0.1 mm to 0.3 mm.

3. A rolling bearing for a supercharger in which grease is enclosed in an annular space formed between an inner ring and an outer ring that are coaxially disposed, and a non-contact sealing member for forming a gap with said inner ring is disposed in a locking groove disposed in an end portion in an axial direction of said outer ring, wherein
an area of an outer circumferential face of said inner ring which is opposed to an inner-ring side end face of said sealing member is formed to have a tapered shape in which a diameter is more increased as advancing from an axial end portion side to a middle side.

4. A rolling bearing for a supercharger according to claim 3, wherein an angle formed by said tapered area and a rotation axis of said inner ring is 5 degrees or more.

5. A rolling bearing for a supercharger according to claim 4, wherein said inner-ring side end face of said sealing member is formed to have a shape parallel to said tapered area.

6. A rolling bearing for a supercharger according to claim 5, wherein an axial length of said inner-ring side end face of said sealing member is twice or more as long as a distance between said inner-ring side end face and said tapered area.
